(19) Europäisches Patentamt / European Patent Office / Office européen des brevets

(11) **EP 3 375 715 B1**

(12) **EUROPEAN PATENT SPECIFICATION**

(45) Date of publication and mention
of the grant of the patent:
**12.08.2020  Bulletin 2020/33**

(21) Application number: **16863721.3**

(22) Date of filing: **11.11.2016**

(51) Int Cl.:
**B64G 1/32** *(2006.01)*       **B64G 1/42** *(2006.01)*
**B64G 1/64** *(2006.01)*       **H01M 10/46** *(2006.01)*
**H01B 1/00** *(2006.01)*       **B64G 1/00** *(2006.01)*

(86) International application number:
**PCT/ES2016/070801**

(87) International publication number:
**WO 2017/081350 (18.05.2017 Gazette 2017/20)**

(54) **SYSTEM FOR GENERATING ELECTRICAL POWER IN ORBIT BY MEANS OF FLOATING CONDUCTOR CABLES**

SYSTEM ZUM ERZEUGEN VON STROM IM ORBIT MITTELS SCHWEBENDER LEITERKABEL

SYSTÈME DE GÉNÉRATION DE PUISSANCE ÉLECTRIQUE EN ORBITE AU MOYEN DE CÂBLES CONDUCTEURS FLOTTANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.11.2015  ES 201531648**

(43) Date of publication of application:
**19.09.2018  Bulletin 2018/38**

(73) Proprietors:
• **Universidad Carlos III de Madrid**
  **28919 Leganés - Madrid (ES)**
• **Universidad Politécnica de Madrid**
  **28040 Madrid (ES)**

(72) Inventors:
• **BOMBARDELLI, Claudio**
  **28040 Madrid (IT)**
• **SÁNCHEZ ARRIAGA, Gonzalo**
  **28919 Leganés (Madrid) (ES)**

(74) Representative: **Ungria López, Javier**
  **Avda. Ramón y Cajal, 78**
  **28043 Madrid (ES)**

(56) References cited:
| | |
|---|---|
| CN-A- 101 767 657 | DE-A1- 4 234 875 |
| FR-A1- 2 809 083 | US-A- 6 116 544 |
| US-A1- 2007 210 213 | US-A1- 2012 104 176 |
| US-A1- 2015 102 172 | US-B1- 6 290 186 |
| US-B1- 6 459 232 | US-B1- 6 755 377 |

• **ECKERT A: "SYSTEMSTUDIE UEBER TETHERTECHNIK, TEIL 1", ZEITSCHRIFT FUR FLUGWISSENSCHAFTEN UND WELTRAUMFORSCHUNG, DFVLR. KOLN, DE, vol. 16, no. 5, 1 October 1992 (1992-10-01), pages 283-293, XP000321743, ISSN: 0342-068X**
• **JOHN D. WILLIAMS ET AL.: 'Low Work Function Coating for an Entirely Propellantless Bare Electrodynamic Tether' IEEE TRANSACTIONS ON PLASMA SCIENCE, [Online] vol. 40, no. 5, May 2012, pages 1441 - 1445, XP011443214 Retrieved from the Internet: <URL:http://ieeexplore.ieee.org/stamp/stamp .js p?arnumber=6179554>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical field of the invention

The present invention belongs to the aerospace field. More particularly, it belongs to the systems for generating electrical power on board satellites. Specifically, those that use moorings or bare electrodynamic tethers as passive elements for the conversion of the orbital energy of a satellite into useful energy on board it, thanks to the electrodynamic force produced by the magnetic field of the planet upon the current carried by the tether.

## State of the Art

One of the most relevant and interesting needs for the market of new space technologies consists of systems for generating electrical power. Systems with low complexity, low cost and high efficiency are needed. This is especially relevant in the field of cubesats, for which the lack of electrical power available on board is actually one of their biggest limitations. It is worth noting that precisely the cubesat market is constantly expanding and it is estimated that it will grow rapidly in the next few years.

The state of the art has already dealt with the problem of generating electrical power on board satellites, being this an essential element for the lifetime of a satellite and the operations thereof. The most widely used system for generating electrical power is based on the photovoltaic principles, in which solar energy is converted into electric energy by means of solar panels and with the possibility of increasing the efficiency of this process with several methods (for example, using solar concentrators and cutting-edge materials).

Currently, photovoltaic methods suffer from several limitations. First, their ability to generate electrical power depends on the amount of solar radiation received which is practically reduced to zero during eclipses, thereby forcing the satellites to store energy in batteries during the illuminated phase of each orbit. Furthermore, the electrical power received decays with the square of the distance from the Sun, which greatly reduces the applicability of this technology in space missions that go farther than Jupiter and Saturn. In these cases, costly systems for generating electrical power based on nuclear reactions are used.

Another significant limitation of photovoltaic systems comes from the lack of scalability and the need for control. The solar panels employed today are fairly heavy and always need to face towards the direction with the most light if they are to prevent significant efficiency losses. As a result of these limitations, very few satellites have the capability for generating electrical power greater than 10 kW, and in the case of cubesats the maximum electrical power is only a few watts.

In the case of satellites in orbit around planets that have a magnetic field and a ionosphere, like the Earth or Jupiter, there is another less conventional mechanism for generating electrical power based on the interaction of conductive tethers in orbit with the surrounding space environment [Drell, S., Foley, H. M., Ruderman, M. A. Dragand propulsion of large satellites in the ionosphere: an Alfven propulsion engine in space, Journal of Geophysical Research, Vol 70, 13, pp 3131-3145, 1965]. This mechanism has been known for several decades and is based on the conversion of orbital energy into electrical energy thanks to the electrodynamic force that acts on a conducting body in movement relative to another conductive, in this particular case the ionospheric plasma and the tether, in the presence of a magnetic field [Alfvén, H, Spacecraft propulsion: new methods, Science, New Series, Vol 176, 4031, pp 167-168, 1972]. According to the physical principles that govern this interaction, conductive tethers in the form of large thin stapes, with lengths, widths and thicknesses typical of the order of kilometres, centimetres and microns respectively, turn out to be very efficient at generating electrical power and have been studied extensively in the scientific literature [Sanmartin, J., Martinez-Sanchez, M and Ahedo, E., Bare wire anodes for electrodynamic tethers, Journal of Propulsion and Power, Vol 9, 3, pp 353- 359, 1993, Sanmartin, J and Estes, R. D., The orbital-motion-limited regime of cylindrical Langmuir probes, Physics of Plasmas, Vol 6, 1, pp 395-405, 1999, Bombardelli, C., Power density of a bare electrodynamic tether generator, Journal of Propulsion and Power, Vol 28, 3, pp 664-668, 2012].

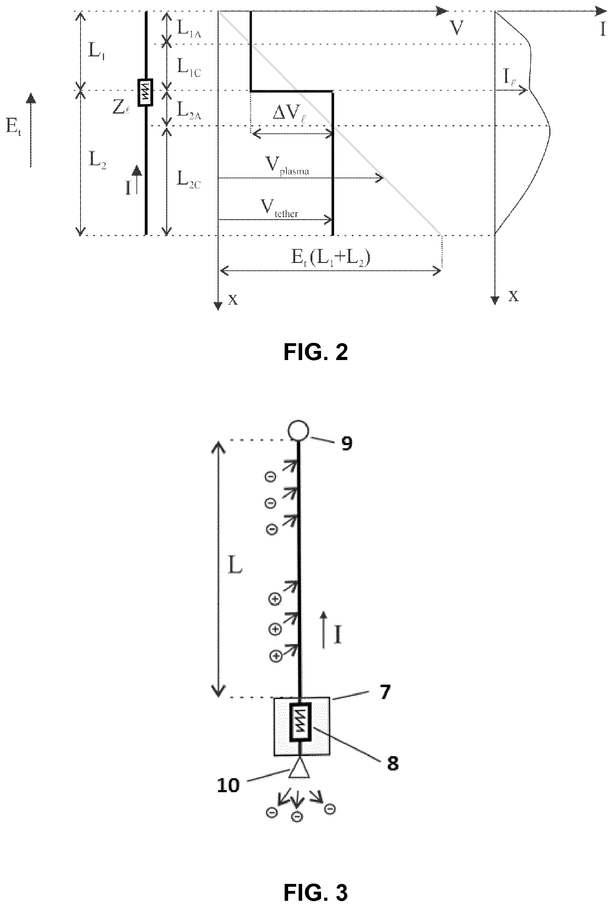

As Figure 3 shows, in the design of all the electrical power systems based on electrodynamic tethers proposed until now [Sanmartín, J., Martínez-Sanchez, M and Ahedo, E., Bare wire anodes for electrodynamic tethers, Journal of Propulsion and Power, Vol 9, 3, pp 353-359, 1993 ] (Also see US applications US4923151 A, US 6459206 B1, US 6755377 B1, US 6758443 B1, US 6419191 B1, US 7118074 B1, US 6116544 A), one pole of the element that uses or stores electrical power is electrically connected to one end of the tether and the other to an electron-emitting device, typically a hollow cathode. In this layout, the intensity is maximum right at the end of the tether where the element for using or storing electrical power is connected. However, the presence of the hollow cathode introduces significant disadvantages. First, the operation of the cathode requires a system for storing inert gas and a device for controlling the flow thereof. Throughout its life, the cathode loses efficiency due to erosion and, once the inert gas runs out, it stops working completely. Second, the system stops being totally passive, which diminishes its attractiveness. Alternatively to the traditional hollow cathodes, other devices, like FEACs (Field emission array cathodes) or thermionic emitters, have been proposed that do not need gas. Currently, the electron emission capability of these devices is still far lower than the one of traditional hollow cathodes.

In the absence of an electron emission device, a bare electrodynamic tether (i.e. without electrical insulation) is not very efficient. The bare tether naturally exchanges charge with the plasma but, due to the large difference in mass between electrons and ions, the current that circulates through is drastically reduced. This is what is known as a floating electrodynamic tether (or floating electrodynamic tether), which has no current intensity at its end points and was proposed as a scientific instrument to artificially excite auroras [Sanmartín, J., Charro, M., Peláez, J., Tinao, I., Elaskar, S., Hilgers, A. and Martínez-Sánchez, M., Floating bare tether as upper atmosphere probe, Journal of Geophysical Research, Vol111, A11310, 1-15, 2006]. That article proposes the use of a conductive tape connected with one of its ends to a scientific satellite, which is deorbited (losing altitude) in a completely passive manner. A similar design of a floating tether to deorbit satellites at the end of a mission was patented in 2012 (US 2012/0138748 A1).

The efficiency of a floating tether increases drastically if it is coated with a low-work function material, which emits electrons naturally at moderate temperatures. This concept, called a thermionic floating tether, was introduced recently with applications for deorbiting satellites [Williams, J. D., Sanmartín, J. and Rand, L. P., Low-Work function coating for entirely propellantless bare electrodynamic tether, IEEETransactionson Plasma Science, Vol 40, 5, pp 1441-1445, 2012]. The most promising thermionic material for this application is $C12A7:e^-$ which shows much better emission and stability properties compared to other ceramic coatings, among which $LaB_6$, $CeB_6$, BaO-W, Ba-W, BaO and $12CaO-7Al_2O_3$ ($C12A7:e^-$) are included.

Both in the article about exciting auroras with floating tethers [Sanmartín, J., Charro, M., Peláez, J., Tinao, I., Elaskar, S., Hilgers, A. and Martinez-Sanchez, M., Floating bare tether as upper atmosphere probe, Journal of Geophysical Research, Vol 111, A11310, 1-15, 2006], and in the US 2012/0138748 A1, the satellite is located at one end point of the tether. By being floating, the current is null on the end, and thus the configuration cannot be used to generate electrical power on board. The only way to generate electrical power in orbit by means of floating tethers is to use a system of multiple tethers (at least two) which are extended from a satellite in opposite directions with respect to the electromotive electrical field. This system of multiple tethers is described and analysed for the first time in this invention. It is important to emphasise that in the abstract of the article about floating tethers with thermionic emission [Williams, J. D., Sanmartín, J. and Rand, L. P., Low-Work function coating for entirely propellantless bare electrodynamic tether, IEEE Transactions on Plasma Science, Vol 40, 5, pp 1441-1445, 2012] the possibility is mentioned of using the concept to deorbit and generate electrical power. However, in the body thereof, the authors exclusively analyse the first of these applications and do not propose any system design that enables the generation of electrical power.

FR 2809083 shows an electrodynamic propulsion system comprising a pair of opposite electrically conductive, non-isolated masts connected to two different poles of an electric power source. US 2012/0104176 A1 discloses an electric sail with voltage multipliers in tethers, wherein the tethers are electrically charged in order to generate thrust from solar wind.

## Summary of the invention

In the present invention, an original design is proposed that, for the first time, enables electrical power to be generated on board a satellite by means of the use of floating tethers, which are responsible for the capture and emission of electrons. The system for using or storing electrical power has two poles, each of which is electrically connected to the end of an assembly of conductive tethers, and wherein each one of the sets of conductive tethers is made up of at least one conductive tether. This detail is essential since, as mentioned previously, a single conductive tether with a system for generating electrical power connected on one of its end is useless. Furthermore, for the first time, the photoelectric emission of electrons throughout the tethers is envisaged and a description is included on how the tethers must be designed to make this mechanism more efficient. Some materials that could facilitate photoelectric emission are the alkaline metals or the compounds Ag- $CS_2O-CS$, Ag-$Cs_3Sb$, and $Na_2KSb$.

The present invention relates to a system for generating electrical power for satellites in orbit characterised in that it comprises two sets of electrodynamic floating conductive tethers (2,3) each one respectively connected to the two poles (4,5) of a system for using or storing electrical power (6) on board a spacecraft in orbit (1).

The design of the system corresponding to the present invention can be modified according to the needs of the mission or space application that uses it. The modifications comprise:

- the possible use of different types of sections (substantially circular, substantially rectangular or tape-like, or substantially annular) for the tethers.
- the possible use of materials with high electronic emissivity (by thermionic or photoelectric effect) for the composition of the tethers and/or to coat the surfaces thereof.
- the possible use of dielectric materials to insulate portions of the surface of the tethers.
- the possible use of materials or treatments that provide a high absorptivity/thermal emissivity ratio in the tethers so that they can reach higher temperatures and increase the electronic emissivity thereof.

- the possible use of end masses connected to one or more tethers at the end furthest from the connection poles of the system for using or storing electrical power, in order to improve the dynamic stability of the tethers, and that can include, among others, a passive ballast mass, deployment system for tethers, another satellite, a spring or a satellite cover.
- the possible use of multiple tethers, not necessarily of the same design, geometric characteristics or composition, connected to a same pole.

## Description of the drawings

To complement the description, and for the purpose of helping to make the characteristics of the invention more readily understandable, the present specification is accompanied by figures 1, 2 and 3, constituting an integral part of the same.

The invention will be described in what follows in more detail by referring to an example of execution thereof represented in figures 1 and 2. Figure 3 reflects the current state of the art, and is added to emphasise the comparative novelty of the present invention.

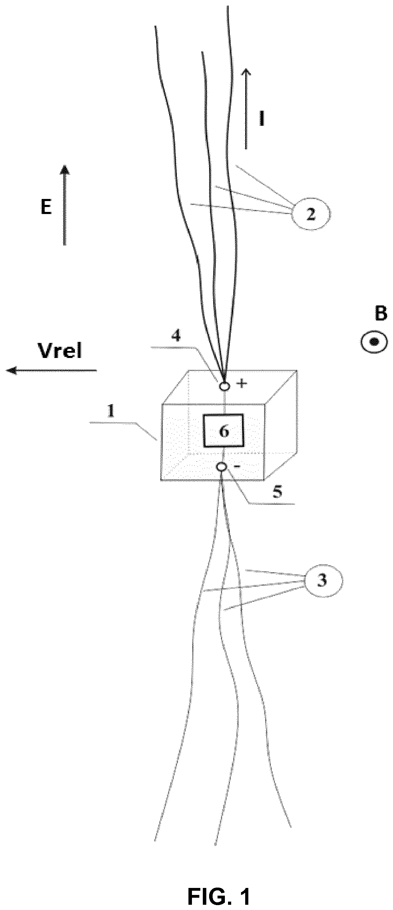

**Figure 1** represents the basic layout and operations of the invention.

**Figure 2** explains the physical mechanism by which the tethers capture current from the surrounding plasma and transmit it to the device for storing or using electrical power.

**Figure 3** represents the classical design of a system for generating electrical power based on a bare electrodynamic tether. Unlike the present invention, this design uses a single electrodynamic tether connected at one end to a spacecraft (7) and a load (8), and at the other end to an end mass (9). The tether, with length $L$, performs the function of collecting electrons from the surrounding plasma, although part of the extension thereof has a negative potential with respect to the plasma and absorbs, in a not very efficient way, ions.

The emission of electrons, necessary to close the circuit and create a stationary current, I, through the tether, is obtained by means of a hollow cathode (10) on board the spacecraft. The entirety of the designs considered until now of systems for producing electrical power in orbit by means of electrodynamic tethers use a similar layout.

## Detailed description of the invention

The design and operations of the invention can be easily understood by taking figure 1 as a reference.

From the spacecraft (1) the sets of bare (without electrical insulation) conductive tethers (2) and (3) are deployed, in opposite directions. In this particular example, each set has three tethers. The tethers belonging to the set (2) are electrically connected to the positive pole (4) while the tethers belonging to the set (3) are electrically connected to the negative pole (5). A device for storing or using electrical power (6) is connected to the two poles (4) and (5).

All the tethers interact with the surrounding environment, characterised by the presence of a magnetic field **B** and an ionosphere. Due to the orbital movement $\mathbf{V}_{rel}$ of the spacecraft with respect to the highly conductive ionospheric plasma, there is an electromotive electrical field $\mathbf{E} = \mathbf{v}_{rel} \times \mathbf{B}$ in the distant plasma in the reference system attached to the spacecraft and a current I flows throughout the tethers. Such a current crosses the device for storing or using electrical power (6) and gives rise to useful electrical power for the spacecraft (1).

The basic physical principles of the operations of the invention will be explained below by referring to figure 2. In this particular example, not necessarily corresponding to the optimal design of the system, two tethers, $L_1$ and $L_2$, respectively, are connected to a device for storing or using electrical power with impedance $Z_e$.

Assuming that the projection of the electromotive electrical field **E** along the direction tangent to the tethers $E_t$ is constant, the electrical potential of the distant plasma $V_{plasma}$ varies linearly along the tethers. The total increase in potential between the ends of the tether is $\Delta V_{plasma} = E_t (L_1 + L_2)$. Moreover, the electric potential of the tethers $V_{tether}$ is kept approximately constant throughout the lengths thereof, as long as, as it is reasonable for a preliminary analysis, the ohmic effects thereof are ignored. However, by passing from one pole to the other, a drop in potential $(\Delta V_{\ell})$ results owing to the presence of the device for storing or using electrical power having non-null impedance $(Z_{\ell})$.

In those points where the potential of the tether is greater than that of the distant plasma, the tether will capture electrons like a collecting Langmuir probe. In those points where the potential of the tether is less than that of the distant plasma, the tether will emit electrons either because of the impact of ions or because the tether is manufactured from or covered by a material that favours the emission of electrons by thermionic or photoelectric effects. In figure 2, a specific case is shown in which each of the tethers has a collector segment and another emitter one. Based on the environmental conditions (magnetic field and plasma density), design of the tethers (cross-section, material and length) and of the electrical impedance of the system for storing or generating electrical power, modifications of this configuration for emitting and capturing electrons along the tethers may exist. The physical principle that governs them is identical to the one previously described.

When the electrons from the surrounding plasma are captured and emitted in different sections of each tether, a current profile (I) is eventually obtained that varies along the tethers. It is important to note that the current is made to be zero in the free ends of the tethers due to them being floating. The conclusion is that through the device for storing or using electrical power a non-null current $(I_\ell)$ flows, that provides the electrical power $P=\Delta V_\ell I_\ell$

The proposed system is suitable for generating electrical power on board a satellite in orbit around a planet equipped with its own magnetic field and ionosphere, such as the Earth or the large outer planets. Unlike the photovoltaic systems, it can provide electrical power during an eclipse.

One key advantage of the design proposed for this invention is the robustness thereof. If any tether has a failure during operation, for example due to an impact of a micro-meteorite or fragment of space debris, the life of the satellite will not be compromised. A floating tether whose length has been reduced by a collision does not stop operating; it continues to provide electrical power, although it will be reduced by an amount that will depend on the reduced length of tether.

In order to increase the efficiency of the system materials or coatings of materials with high electronic emissivity can be used (thermionic materials with low-work function or photoelectric materials). These coatings or materials can be used in one or more floating tethers along the entire length or along a segment thereof.

One key aspect is the selection of the dimensions of the tethers (lengths and transverse cross section). By means of an example the steps to be followed to obtain an optimal design are explained in the case of figure 2, wherein the two tethers have the same perimeter and are manufactured with the same materials. Although this model should be adapted to the specific configuration that is to be examined, for example by adding more tethers or electrically insulating some segment with respect to the plasma, the design layout is always similar.

First it is necessary to calculate the current and potential profiles along the tether. In the case of figure 2, if ohmic effects are ignored, the difference in potential between the tether and the plasma is:

$$V(x) \equiv V_{tether}(x) - V_{plasma}(x) = \begin{cases} V_0 - E_t x & x < L_1 \\ V_0 + \Delta V_\ell - E_t x & L_1 < x < L \end{cases} \quad (0.1)$$

where $V_0 > 0$ is the difference in potential between the tether and the distant plasma for x=0 and $L=L_1+L_2$. As explained below, the value of $V_0$ is known as part of the solution of the problem as well as the lengths

$$L_{1A} = V_0/E_t , \ L_{2A} = -L_1 + (V_0 + \Delta V_l)/E_t , \ L_{1C} = L_1 - L_{1A} \ y \ L_{2C} = L_2 - L_{2A} .$$

Second, the current profile is calculated consistently with equation (0.1). The two tether segments $L_{1A} < x \leq L_1$ and $L_1 + L_{2A} < x \leq L$, whose cross sections have, for simplicity, the same perimeter $p_t$, emit electrons thanks to three different physical effects according to equation (1.2).

$$\frac{dI}{dx} = p_t \left[ e \int_0^\infty S(U)Y(U)dU + aT^2 \exp\left(-\frac{W}{k_B T}\right) + \frac{eN_0}{\pi}\sqrt{\frac{2eV(x)}{m_i}}\left(1 + \gamma|V(x)|\right) \right] \quad (0.2)$$

The first term of the right member of the preceding equation represents the photoelectric effect and involves the solar flux $S(U)$ of incident energy on the tether (number of photons per unit of time, surface and energy $U)$ and the quantum yield $Y(U)$ (or *"photoelectric yield"*) of the tether, meaning the number of photoelectrons extracted per incident photon energy $U$. The photoelectric emission of the tether has never been exploited before in applications of bare electrodynamic tethers.

The second term is the thermionic emission proposed in the Ref. *[Williams, J. D., Sanmartín, J. and Rand, L. P., Low-Work function coating for entirely propellantless bare electrodynamic tether, IEEE Transactionson Plasma Science, Vol 40, 5, pp 1441-1445, 2012]*. This mechanism involves the Richardson constant ($a$ = 1.2x10[6] A/m[2]K[2]), the Boltzmann constant ($k_B$) and the temperature ($T$) and work function of the tether ($W$), respectively.

The third term is the current emitted upon the tether receiving the impact of the ions, a mechanism proposed in Ref. *[Sanmartin, J., Charro, M., Peláez, J., Tinao, I., Elaskar, S., Hilgers, A. and Martinez-Sanchez, M., Floating bare tether as upper atmosphere probe, Journal of Geophysical Research, Vol 111, A11310, 1-15, 2006]*. It depends on the

plasma density $(N_0)$, on the mass $(m_i)$ of the plasma ions, on the charge $(e)$ and on the product $\gamma|\Delta V|$ which represents the number of electrons emitted per impacting ion.

Based on the design of the tethers, for example on the possible addition or not of a coating material with low $W$ or high $Y(U)$, and on the operation thereof (temperature that they can reach) it is expected that one of the three terms becomes dominant compared to the remaining ones.

Finally, the two tether segments $0<x<L_{1A}$ and $L_1<x \leq L_1+L_{2A}$, with cross sections with the same perimeter $p_t$, capture electrons. A good approximation to model the captured electrons is the Orbital-Motion-Limited theory (OML) based on the high potential difference $V(x)$ [Sanmartín, J., Martínez-Sánchez, M and Ahedo, E., Bare wire anodes for electrodynamic tethers, Journal of Propulsion and Power, Vol 9, 3, pp 353-359, 1993]:

$$\frac{dI}{dx} = -\frac{ep_tN_0}{\pi}\sqrt{\frac{2eV(x)}{m_e}} \quad 0 < x \leq L_{1A}, \quad L_1 < x \leq L_1 + L_{2A} \qquad (0.3)$$

The integration of Equations (0.2) and (0.3) with the potential given by (0.1) and the boundary conditions $I(0)=I(L)=0$ provides the current profile $I(x)$ and the value of $V_0$ (as well as the lengths $L_{1A}, L_{1C}, L_{2A}$ and $L_{2C}$).

Once the current profile is known, the following figures of merit are calculated:

Electrical power generated per unit of mass:

$$w_{gen} = \frac{\Delta V_\ell I_\ell}{m_t},$$

Probability of tether being severed:

$$N_c = -\pi L \Delta t_{mission} \int_{\delta_{min}}^{\delta_\infty} D_{eff}(\delta)\frac{dG}{d\delta}d\delta,$$

where $I_\ell$ is the current that flows through the device for storing or using electrical power in $x=L_1$, $m_t$ is the total mass of the tethers, $\Delta t_{mission}$ is the expected mission time, $D_{eff}$ is the effective diameter of the tether, G is the flux of micrometeorites with size $\delta$, and $\delta_\infty$, $\delta_{min}$ the maximum and minimum meteorite size that can cause a failure in the tether, respectively.

These figures of merit were proposed previously in order to optimise the design of electrodynamic tethers equipped with plasma contactors in the works [Sanmartín, J., Martínez-Sánchez, M and Ahedo, E., Bare wire anodes for electrodynamic tethers, Journal of Propulsion and Power, Vol 9, 3, pp 353-359, 1993][J. Sanmartín, A. Sánchez-Torres, S. B. Khan, G. Sánchez-Arriaga and M. Charro, Optimum sizing of bare-tethers for de-orbiting satellites at end of mission, Advances in Space Research 56, 1, 1485-1492, 2015]. Based on the mission, the specific tethers design, including the lengths and cross sections thereof, will be optimised by maximising the electrical power generated per unit of mass and minimising the probability of failure.

The example of figure 2, wherein each tether has an anodic segment and another one that is cathodic, should be understood as an exemplary embodiment with the only purpose of illustrating the operations and optimisation of the system and not as a universal design. Furthermore, even for an identical system of tethers, meaning all the physical properties thereof are fixed, the system can operate in other operation regimes. For example, during part of the mission there could be a cathodic segment and another anodic one in each tether and in another moment that entire tether could act as a cathodic segment (negatively polarised with respect to the plasma and emitting electrons). This is so because the system of equations (0.1)-(0.3) depends on environmental parameters, such as the plasma density or the electromotive field, and based on these the solution thereof is different. There are solutions in which some of the lengths $L_{1A}$, $L_{1C}$, $L_{2A}$ and $L_{2C}$ is null.

A crucial aspect in the optimal design of the system when it is expected that it works dominated by thermionic emission is the temperature of the tethers. This aspect is critical due to the exponential dependence of the current emitted with the factor $W/k_BT$ in equation (0.2). Ignoring the heating by the Joule effect and the energy contributed by the electrons upon impacting the anodic segment, the equilibrium temperature $T_{eq}$ of the tether is determined by a balance between the solar heating and the radiative cooling according to equation:

$$T_{eq} = \left( \frac{\alpha_{abs}}{\varepsilon_{emis}} \frac{S}{\pi\sigma_B} \right)^{1/4} \qquad (1.4)$$

where $S$ is the solar constant, $\delta_B$ the Stefan-Boltzmann constant and $\alpha_{abs}$ and $\varepsilon_{emis}$ the absorptivity and thermal emissivity of the tether.

In order to have reasonable efficiency values the current densities of the emitted and captured current must be of the same order, which provides the following link between the work-function of the material and the temperature thereof [see equations (0.2) and (1.3)]

$$W \approx -k_B T_{eq} \; ln\left( \frac{eN_0}{A\pi T_{eq}^2} \sqrt{\frac{E_t L}{m_e}} \right)$$

$$(1.5)$$

The selection of the quotient $\alpha_{abs}/\varepsilon_{emis}$ in equation (1.4) is critical since the temperature must be within in a certain range of operation. The tether must be hot to favour the emission of electrons by thermionic effect, but without exceeding the temperature limit above which the material loses mechanical properties. The state of the art of the work functions of materials LaB$_6$ and CeB$_6$ are around 2.5 eV, while for the material C12A7:e$^-$ it can potentially reach 0.65 eV [Y. Toda, K. Kobayashi, K. Hayashi, S. Ueda, T. Kamiya, M. Hirano and H. Hosono, Field Emission of Electron anions clathrated in subnanometer- sized cages in [Ca24Al28O 64]4+(4e-), Adv. Matter, 16, 685-689, 2004]. These values, together with the environmental parameters $E_t$ and $N_0$ in low Earth orbit, indicate that the temperature of the tether must be between 300 and 1000 K (or even more if the conductive material can handle it). These two temperatures lead to quotients of $\alpha_{abs} \mid \varepsilon_{emis}$ around 1 and 130, respectively.

La selección del cociente $\alpha_{abs}/\varepsilon_{emis}$ en la ecuacion (1.4) es critica ya que la temperatura debe estar comprendida en cierto rango de operacion. El cable debe estar caliente para favorecer la emisión de electrones por efecto termionico pero sin sobrepasar el limite de temperatura por encima del cual el material pierde propiedades mecanicas. El estado del arte de las funciones de trabajo de los materiales LaB$_6$ y CeB$_6$ se encuentran alrededor de los 2,5 eV y para el material C12A7:e$^-$ puede ser potencialmente 0,65 eV [Y. Toda, K. Kobayashi, K. Hayashi, S. Ueda, T. Kamiya, M. Hirano y H. Hosono, Field Emission of Electron anions clathrated in subnanometer-sized cages in [Ca24Al28O64]4+(4e-), Adv. Matter, 16, 685-689, 2004]. Estos valores, junto con los parametros ambientales de $E_t$ y $N_0$ en baja órbita terrestre, indican que la temperatura del cable deberá encontrarse entre los 300 y los 1000 K (mayores si el material conductor puede soportarlo). Estas dos temperaturas conducen a cocientes de $\alpha_{abs}/\varepsilon_{emis}$ alrededor de 1 y 130, respectivamente.

## Claims

1. A system for generating electrical power in orbit **characterised in that** it comprises two sets of bare, without electrical insulation, floating electrodynamic conductive tethers (2, 3) respectively connected to each of two poles (4, 5) of a system (6) for using or storing electrical power, each set being formed by at least one conductive tether,
   wherein each set of tethers is oriented in opposite directions with respect to an electromotive electrical field,
   and wherein at least one of the electrodynamic tethers is made up of a material that facilitates the emission of electrons by thermionic effect or photoelectric effect or made up of conductive substrate coated along the complete extension thereof or a portion of it by a material that facilitates the emission of electrons by thermionic effect or photoelectric effect.

2. The system according to claim **1** wherein each set of conductive tethers made up of two or more conductive tethers has the tethers thereof connected electrically to each other throughout the extension thereof in one or more points.

3. The system according to any one of the preceding claims, wherein at least one of the electrodynamic tethers has an end mass connected at the tether end that is furthest from the system used for using or storing electrical power.

4. The system according to claim 3, wherein the end mass comprises at least one of the following elements: passive ballast mass, deployment system for tethers, another satellite or satellite cover.

5. The system according to any one of the preceding claims, wherein at least one of the electrodynamic tethers thereof has one a substantially circular cross section, a substantially tape-like cross section, and a substantially annular cross section.

6. The system according to any one of the preceding claims, wherein the material that facilitates the emission of electrons by thermionic effect comprises at least one of the following compounds: LaB6, CeB6, BaO-W, Ba-W, BaO, and 12CaO-7Al2O3(C12A7:e-).

7. The system according to claim any one of the preceding claims, wherein the material that facilitates the emission of electrons by photoelectric effect comprises at least one alkaline metal or one of the compounds Ag-Cs2OCs, Ag-Cs3Sb and Na2KSb.

8. The system according to any one of the preceding claims, wherein at least one of the electrodynamic tethers is substantially manufactured from materials that comprise at least one of the following: graphene, Aluminium alloys, Beryllium-Copper alloys.

**Patentansprüche**

1. System zur Erzeugung elektrischer Energie im Orbit, **dadurch gekennzeichnet, dass** es zwei Sätze von bloßen, nicht elektrisch isolierten, schwebenden, elektrodynamisch leitenden Seilen (2, 3) umfasst, die jeweils mit jedem der zwei Pole (4, 5) eines Systems (6) zur Nutzung oder Speicherung elektrischer Energie verbunden sind, wobei jeder Satz aus wenigstens einem leitfähigen Seil gebildet wird,
wobei jeder Satz von Seilen in entgegengesetzte Richtungen mit Bezug auf ein elektromotorisches elektrisches Feld ausgerichtet ist,
und wobei wenigstens eines der elektrodynamischen Seile aus einem Material besteht, das die Emission von Elektronen durch thermionischen Effekt oder photoelektrischen Effekt begünstigt, oder aus einem leitenden Substrat besteht, das entlang seiner gesamten Ausdehnung oder einem Teil davon mit einem Material beschichtet ist, das die Emission von Elektronen durch therm ionischen Effekt oder photoelektrischen Effekt begünstigt.

2. System nach Anspruch 1, wobei jeder Satz von leitenden Seilen, der aus zwei oder mehr leitenden Seilen besteht, Seile davon hat, die über ihre gesamte Ausdehnung an einem oder mehreren Punkten elektrisch miteinander verbunden sind.

3. System nach einem der vorhergehenden Ansprüche, wobei wenigstens eines der elektrodynamischen Seile eine Endmasse hat, die an dem Seilende verbunden ist, das am weitesten von dem System entfernt ist, das zur Nutzung oder Speicherung von elektrischer Energie verwendet wird.

4. System nach Anspruch 3, wobei die Endmasse wenigstens eines der folgenden Elemente umfasst: passive Ballastmasse, Einsatzsystem für Seile, ein weiterer Satellit oder eine Satellitenabdeckung.

5. System nach einem der vorhergehenden Ansprüche, wobei wenigstens eines der elektrodynamischen Seile davon einen im Wesentlichen kreisförmigen Querschnitt, einen im Wesentlichen bandartigen Querschnitt oder einen im Wesentlichen ringförmigen Querschnitt hat.

6. System nach einem der vorhergehenden Ansprüche, wobei die Material, das die Emission von Elektronen durch den thermionischen Effekt begünstigt, wenigstens eine der folgenden Verbindungen umfasst: LaB6, CeB6, BaO-W, Ba-W, BaO und 12CaO-7 Al2O3(C12A7:e-).

7. System nach einem der vorhergehenden Ansprüche, wobei das Material, das die Emission von Elektronen durch photoelektrischen Effekt begünstigt, wenigstens ein Alkalimetall oder eine der Verbindungen Ag-Cs2OCs, Ag-Cs3Sb und Na2KSb umfasst.

8. System nach einem der vorhergehenden Ansprüche, wobei wenigstens eines der elektrodynamischen Seile im Wesentlichen aus Materialien hergestellt ist, die wenigstens eines der folgenden umfassen: Graphen, Aluminiumlegierungen, Beryllium-Kupfer-Legierungen.

**Revendications**

1. Système de génération de puissance électrique en orbite **caractérisé en ce qu'**il comprend deux ensembles de câbles conducteurs électrodynamiques flottants dénudés sans isolation électrique (2, 3) connectés respectivement à chacun de deux pôles (4, 5) d'un système (6) d'utilisation ou de stockage de puissance électrique, chaque ensemble étant formé par au moins un câble conducteur,

   dans lequel chaque ensemble de câbles est orienté dans des directions opposées par rapport à un champ électrique électromoteur,

   et dans lequel au moins un des câbles électrodynamiques est constitué d'un matériau qui facilite l'émission d'électrons par effet thermoïonique ou effet photoélectrique ou constitué d'un substrat conducteur revêtu le long de son étendue complète ou d'une partie de celui-ci par un matériau qui facilite l'émission d'électrons par effet thermoïonique ou effet photoélectrique.

2. Système selon la revendication 1, dans lequel chaque ensemble de câbles conducteurs constitué de deux câbles conducteurs ou plus a ses câbles connectés électriquement les uns aux autres sur l'ensemble de son étendue en un ou plusieurs points.

3. Système selon l'une quelconque des revendications précédentes, dans lequel au moins un des câbles électrodynamiques possède une masse d'extrémité connectée à l'extrémité du câble qui est la plus éloignée du système utilisé pour utiliser ou stocker une puissance électrique.

4. Système selon la revendication 3, dans lequel la masse d'extrémité comprend au moins un des éléments suivants : masse de lestage passive, système de déploiement pour câbles, autre satellite ou couverture satellite.

5. Système selon l'une quelconque des revendications précédentes, dans lequel au moins un des câbles électrodynamiques de celui-ci possède une d'une section transversale sensiblement circulaire, d'une section transversale sensiblement en forme de bande et d'une section transversale sensiblement annulaire.

6. Système selon l'une quelconque des revendications précédentes, dans lequel le matériau qui facilite l'émission d'électrons par effet thermoïonique comprend au moins un des composés suivants : $LaB_6$, $CeB_6$, BaO-W, Ba-W, BaO et $12CaO \cdot 7Al_2O_3$(C12A7:e-).

7. Système selon l'une quelconque des revendications précédentes, dans lequel le matériau qui facilite l'émission d'électrons par effet photoélectrique comprend au moins un métal alcalin ou un des composés $Ag$-$Cs_2OCs$, $Ag$-$Cs_3Sb$ et $Na_2KSb$.

8. Système selon l'une quelconque des revendications précédentes, dans lequel au moins un des câbles électrodynamiques est sensiblement fabriqué à partir de matériaux qui comprennent au moins l'un des suivants : graphène, alliages d'aluminium, alliages de béryllium et de cuivre.

**FIG. 1**

**FIG. 2**

**FIG. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4923151 A
- US 6459206 B1
- US 6755377 B1
- US 6758443 B1
- US 6419191 B1
- US 7118074 B1
- US 6116544 A
- US 20120138748 A1
- FR 2809083
- US 20120104176 A1

### Non-patent literature cited in the description

- **DRELL, S. ; FOLEY, H. M. ; RUDERMAN, M. A.** Dragand propulsion of large satellites in the ionosphere: an Alfven propulsion engine in space. *Journal of Geophysical Research,* 1965, vol. 70 (13), 3131-3145
- **ALFVÉN, H.** Spacecraft propulsion: new methods. *Science, New Series,* 1972, vol. 176 (4031), 167-168
- **SANMARTIN, J. ; MARTINEZ-SANCHEZ, M ; AHEDO, E.** Bare wire anodes for electrodynamic tethers. *Journal of Propulsion and Power,* 1993, vol. 9 (3), 353-359
- **SANMARTIN, J ; ESTES, R. D.** The orbital-motion-limited regime of cylindrical Langmuir probes. *Physics of Plasmas,* 1999, vol. 6 (1), 395-405
- **BOMBARDELLI, C.** Power density of a bare electrodynamic tether generator. *Journal of Propulsion and Power,* 2012, vol. 28 (3), 664-668
- **SANMARTÍN, J. ; MARTÍNEZ-SANCHEZ, M ; AHEDO, E.** Bare wire anodes for electrodynamic tethers. *Journal of Propulsion and Power,* 1993, vol. 9 (3), 353-359
- **SANMARTÍN, J. ; CHARRO, M. ; PELÁEZ, J. ; TINAO, I. ; ELASKAR, S. ; HILGERS, A. ; MARTÍNEZ-SÁNCHEZ, M.** Floating bare tether as upper atmosphere probe. *Journal of Geophysical Research,* 2006, vol. 111 (A11310), 1-15
- **WILLIAMS, J. D. ; SANMARTÍN, J. ; RAND, L. P.** Low-Work function coating for entirely propellantless bare electrodynamic tether. *IEEETransactionson Plasma Science,* 2012, vol. 40 (5), 1441-1445
- **SANMARTÍN, J. ; CHARRO, M. ; PELÁEZ, J. ; TINAO, I. ; ELASKAR, S. ; HILGERS, A. ; MARTINEZ-SANCHEZ, M.** Floating bare tether as upper atmosphere probe. *Journal of Geophysical Research,* 2006, vol. 111 (A11310), 1-15
- **WILLIAMS, J. D. ; SANMARTÍN, J. ; RAND, L. P.** Low-Work function coating for entirely propellantless bare electrodynamic tether. *IEEE Transactions on Plasma Science,* 2012, vol. 40 (5), 1441-1445
- **WILLIAMS, J. D. ; SANMARTÍN, J. ; RAND, L. P.** Low-Work function coating for entirely propellantless bare electrodynamic tether. *IEEE Transactionson Plasma Science,* 2012, vol. 40 (5), 1441-1445
- **SANMARTIN, J. ; CHARRO, M. ; PELÁEZ, J. ; TINAO, I. ; ELASKAR, S. ; HILGERS, A. ; MARTINEZ-SANCHEZ, M.** Floating bare tether as upper atmosphere probe. *Journal of Geophysical Research,* 2006, vol. 111 (A11310), 1-15
- **SANMARTÍN, J. ; MARTÍNEZ-SÁNCHEZ, M ; AHEDO, E.** Bare wire anodes for electrodynamic tethers. *Journal of Propulsion and Power,* 1993, vol. 9 (3), 353-359
- **J. SANMARTÍN ; A. SÁNCHEZ-TORRES ; S. B. KHAN ; G. SÁNCHEZ-ARRIAGA ; M. CHARRO.** *Optimum sizing of bare-tethers for de-orbiting satellites at end of mission, Advances in Space Research,* 2015, vol. 56 (1), 1485-1492
- **Y. TODA ; K. KOBAYASHI ; K. HAYASHI ; S. UEDA ; T. KAMIYA ; M. HIRANO ; H. HOSONO.** Field Emission of Electron anions clathrated in subnanometer- sized cages in [Ca24Al28O ]4+(4e). *Adv. Matter,* 2004, vol. 16, 685-689
- **Y. TODA ; K. KOBAYASHI ; K. HAYASHI ; S. UEDA ; T. KAMIYA ; M. HIRANO Y ; H. HOSONO.** Field Emission of Electron anions clathrated in subnanometer-sized cages in [Ca24Al28O64]4+(4e). *Adv. Matter,* 2004, vol. 16, 685-689